# EUROPEAN PATENT APPLICATION

(11) **EP 1 911 573 A1**
(43) Date of publication of application: **16.04.2008**
(21) Application number: 06781516.7
(22) Date of filing: 25.07.2006
(51) Int. Cl.: B29D 30/48

(54) **METHOD FOR ARRANGING WIRE AND MACHINE FOR FORMING WIRE CONSTITUTING MEMBER BY USING PITCH FEED ROLLER**

(30) Priority: 26.07.2005 JP 2005215727
(71) Applicant: Bridgestone Corporation, Tokyo 104-8340 (JP)
(72) Inventor: MIZOTA, Yasuo, c/o Bridgestone Corporation,, Tokyo 1878531 (JP)
(74) Representative: Whalley, Kevin
(86) International application number: PCT/JP2006/314604
(87) International publication number: WO 2007/013417

(57) **Abstract**

A cord arranging method using a guide roller and capable of forming annular cord structures of various shapes is disclosed. A guide roller 30 is moved along the surface of a rotating core 13 to guide a continuously fed cord 1 to a continuously changing position on the surface of the core 13 to wind the cord 1 in successively and closely arranged coils to form an annular cord structure. The guide roller 30 is moved two-dimensionally along the surface of the core 13, and the angular position of the guide roller 30 is regulated such that the guide roller 30 presses the cord 1 against the surface of the core 13 always perpendicularly to the surface of the core 13.

## Description

### TECHNICAL FIELD

The present invention relates to a method of regularly winding and arranging a cord in regularly arranged loops to form an annular cord structure, and a cord arranging machine.

### BACKGROUND ART

An annular cord structure of this kind is, for example, a bead wire, namely, a reinforcing ring, or other annular reinforcement for a pneumatic tire. An example of a bead wire manufacturing apparatus for manufacturing a bead wire by winding a cord around a flat cylindrical forming tool is mentioned in Patent Document 1.

Patent Document 1: JP 35-18188 B

The bead wire manufacturing apparatus disclosed in Patent Document 1 has a rotating forming tool provided with a circumferential groove, and a guide member. The forming tool is rotated, the guide member guides a cord to predetermined positions in the circumferential groove of the forming tool and presses the cord to position the cord. The guide member is moved parallel to the axis of the forming tool to wind the cord around the forming tool in contiguously arranged cord coils to form a first layer of the cord coils. Then, the guide member is moved perpendicularly to the bottom surface of the circumferential groove, and the cord is wound on the forming tool to form a second layer of cord coils. Several superposed layers each of the contiguously arranged cord coils are thus formed to complete a bead wire.

The bead wire manufacturing apparatus disclosed in Patent Document 1 forms bead wires parallel to each other on the flat bottom surface of the circumferential groove of the forming tool. Therefore, the guide member is moved in a direction parallel to the bottom surface of the circumferential groove (parallel to the axis of the forming tool) and a direction perpendicular to the bottom surface of the circumferential groove; that is, the guide member is moved only in a two-dimensional plane.

### DISCLOSURE OF THE INVENTION

### UNDERLYING PROBLEM TO BE SOLVED BY THE INVENTION

If a surface on which the cord is laid is not only a simple flat surface parallel to the moving direction of the guide member and includes a taper surface and perpendicular surfaces to form annular cord structures respectively having different shapes, a direction in which the guide member presses the cord is inclined to the winding surface. Consequently, the cord cannot be stably positioned. Thus the cord cannot be wound on such a complex winding surface by simply two-dimensionally moving the guide member.

The present invention has been made in view of such a problem and it is therefore an object of the present invention to provide a cord arranging method and machine using a guide roller and capable of forming annular cord structures of various shapes.

### MEANS TO SOLVE THE UNDERLYING PROBLEM

To attain the above object, the present invention provides a cord arranging method comprising: continuously feeding a cord to a rotating core; and guiding the continuously fed cord by a guide roller by moving the guide roller along a surface of the core such that the cord is wound in continuously arranged cord coils; wherein the guide roller is moved two-dimensionally along the surface of the core and the angular position of the core is varied such that the guide roller presses the cord always perpendicularly to the surface of the core.

Typically, the angular position of the guide roller is changed by turning the guide roller about the center axis of a part of the cord pressed against the surface of the core by the guide roller.

To attain the above object, the present invention provides a cord arranging machine comprising a core, a rotational drive mechanism for holding and rotating the core, a guide roller for guiding a continuously fed cord such that the cord is wound in successively arranged coils on a surface of the core; the cord arranging machine comprising: a sliding table mechanism provided for movement in directions toward and away from the core and parallel to the surface of the core; and a turning support head for supporting the guide roller for rotation; wherein a circular rail of a shape resembling an arc of a circle having its center on a side of the core is laid on the sliding table mechanism, and the turning support head is guided by the circular rail for movement such that the position of the turning support head changes so as to make the guide roller press the cord against the surface of the core always perpendicularly to the surface of the core.

In the cord arranging machine of the present invention, the turning support head supporting the guide roller for rotation may be provided at an end thereof with a rod for advancing movement, a forked support attached to a free end of the rod, and a shaft extended across and supported on the forked support, and the guide roller may be rotatably supported by the shaft.

### EFFECT OF THE INVENTION

The cord arranging method of the present invention moves the guide roller two-dimensionally parallel to the surface of the core, and changes the position of the guide roller such that the guide roller presses the cord against the surface of the core always perpendicularly to the surface of the core. Therefore, the cord can be surely and stably pressed against the surface of the core even if the surface of the core is inclined. Consequently, the coils of the cord can be accurately arranged and various annular cord structures can be easily formed.

The guide roller turns about the center axis of a pressed part of the cord pressed against the surface of the core to change the position of the guide roller. Consequently, the position of the guide roller can be changed without changing the position of the cord on the core and hence the disarrangement of the coils of the cord can be prevented.

The cord arranging machine of the present invention has the same effects as the cord arranging method.

### BRIEF DESCRIPTION OF THE DRAWINGS

Fig. 1 is a schematic perspective view of a core arranging machine for carrying out a core arranging method in a preferred embodiment of the present invention;
Fig. 2 is a top view for explaining turning of a guide roller employed in the core arranging method of the invention;
Fig. 3 is view showing the contour of a front surface of a rigid core on an XY coordinate system;
Fig. 4 is a schematic perspective view of another core arranging machine;
Fig. 5 is a fragmentary sectional view of a bead wire former included in the core arranging machine shown in Fig. 4; and
Fig. 6 is a fragmentary sectional view of another bead wire former.

### REFERENCE SIGNS

1 ... Cord, 2 ... Annular reinforcement, 10 ... Cord arranging machine, 11 ... Rotational drive mechanism, 12 ... Rotational drive shaft, 13 ... Rigid core, 14 ... Front surface, 21 ... Cord feed unit, 22 ... Base, 23 ... X-axis slide table, 24 ... Y-axis slide table, 25 ... Turning support head, 26 ... Air cylinder, 27 ... Rod, 28 ... Forked support, 29 ... Shaft, 30 ... Guide roller, 40 ... Controller, 50 ... Bead wire former, 51 ... Circumferential groove, 52 ... Taper surface, 60 ... Bead forming device, 61 ... Circumferential groove

### BEST MODE FOR CARRYING OUT THE INVENTION

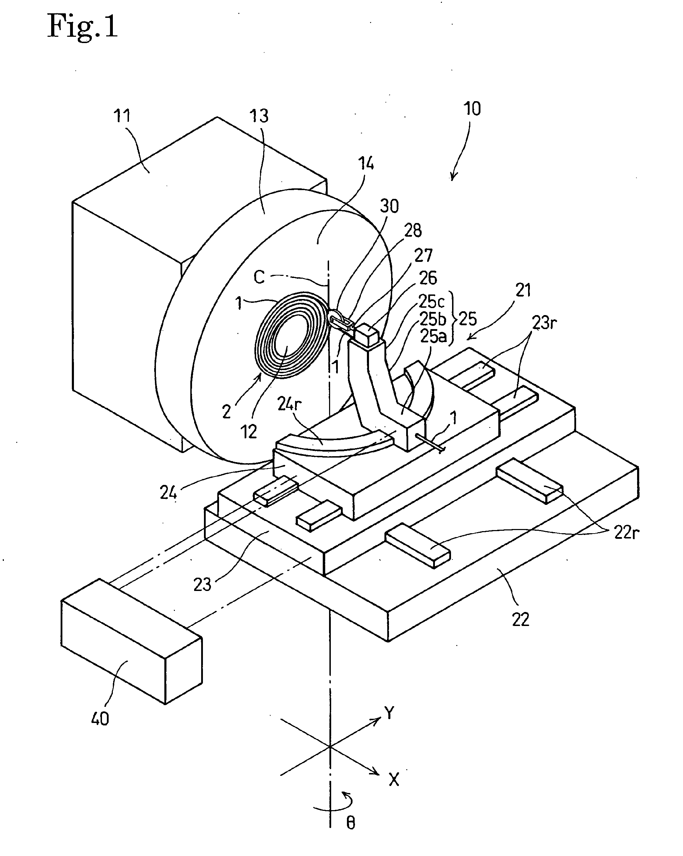

A cord arranging method and machine in a preferred embodiment of the present invention will be described with reference to Figs. 1 to 3.

The cord arranging method is applied to forming an annular reinforcement (annular cord structure) 2 for reinforcing a side wall of a tire. Fig. 1 is a schematic view of a cord arranging machine 10 in a preferred embodiment of the present invention for carrying out the cord arranging method of the present invention in an operation for forming an annular reinforcement 2.

A rigid core 13 is mounted on a horizontal rotational drive shaft 12 included in a rotational drive mechanism 11. The rigid core 13 is a support member for supporting an arrangement of a cord. The rigid core 13 is formed in a toroidal shape and has a central bore for receiving the drive shaft 12. A rubber-coated cord 1 is wound on the front surface 14 of the rigid core 13 to form the annular reinforcement 2. A cord feed unit 21 is disposed opposite to the front surface 14 of the rigid core 13.

An X-axis is parallel to the axis of the rotating drive shaft 12 supporting the rigid core 13, and a horizontal Y-axis is perpendicular to the X-axis.

The wire feed unit 21 has a base 22, rails 22r laid parallel to the X-axis on the upper surface of the base 22, an X-axis slide table 23 guided by the rails 22r for sliding movement parallel to the X-axis on the base 22, rails 23r laid parallel to the Y-axis on the upper surface of the X-axis slide table 23, and a Y-axis slide table 24 guided by the rails 23r for sliding movement parallel to the Y-axis.

A circular rail 24r curved in a circular arc is fixedly laid on the upper surface of the Y-axis sliding table 24. A turning support head 25 is provided to be guided by the circular rail 24r for turning along the circular rail 24r. The circular arc of the circular rail 24r has its center on a vertical axis C on the side of the rigid core 13

The turning support head 25 has a horizontal part 25a extending across the circular rail 24r in a direction parallel to a radius of the circle having its center on the vertical axis C, an inclined part 25b extending obliquely upward toward the vertical axis C, and a vertical upper end part 25c formed integrally with the inclined part 25b. An air cylinder 26 is attached to the upper surface of the vertical upper end part 25c.

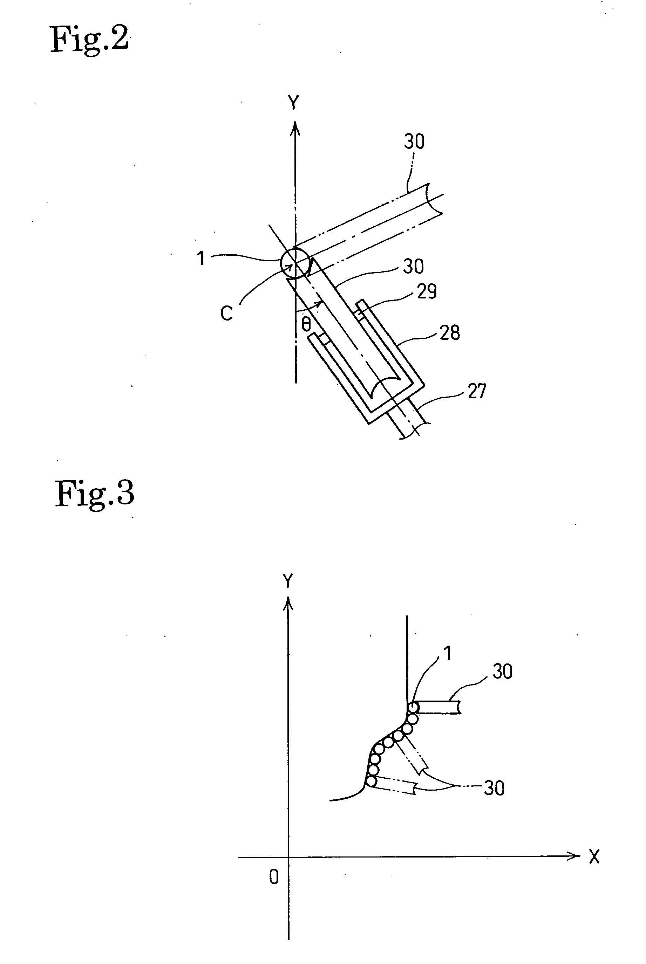

A rod 27 included in the air cylinder 26 extends toward the vertical axis C. As shown in Fig. 2, a bifurcate forked member 28 is fixedly attached to the free end of the rod 27. A shaft 29 is supported horizontally on an end part of the forked member 28. A guide roller 30 is rotatably supported by the shaft 29.

The guide roller 30 is provided in its circumference with an annular groove having a cross section resembling a circular arc. The cord 1 is engaged in the annular groove of the guide roller 30 so that the cord 1 may not be disengaged from the guide roller 20.

The cord 1 is passed through the turning support head 25. The cord 1 supplied through the rear end surface of the horizontal part 25a into the turning support head 25 is extended or passed through the horizontal part 25a, the inclined part 25b and the vertical part 25c in that order. Then, the cord 1 passed through an exit formed in the vertical part 25c is wound round the guide roller 30. The air cylinder 26 pushes the guide roller 30 to press the cord 1 against a desired part of the front surface 14 of the rigid core 13 by the guide roller 30. Thus the cord 1 is positioned and laid on the front surface 14.

The air cylinder 26 can apply pressure to the cord 1 to press the cord 1 against the front surface 14 and can absorb the effect of irregularities of the front surface 14 on the guide roller 30 to restrain the guide roller 30 from jumping.

Thus the center axis of a part of the cord 1 pressed against the rigid core 13 is aligned with the vertical axis C. As shown in Fig. 2, the guide roller 30 is turnable about the center axis of the part of the cord 1 positioned on the front surface 14 of the rigid core 13 aligned with the vertical axis C. The angle θ (Fig.2) between the Y-axis and the center plane of the guide roller 30 can be freely changeable. Thus the guide roller 30 can be moved along the X- and the Y-axis, and can be turned to change the angle θ.

Motors, not shown, operate to move the guide roller 30 in directions parallel to the X- and the Y-axis and to turn the guide roller 30. The motors are controlled by a controller 40 (Fig. 1) including a computer.

Suppose that a rectangular coordinate system, namely, an XY coordinate system, has X- and Y-axis intersecting each other at an origin O on the center axis of rigid core 13 as shown in Fig. 3. The controller 40 stores coordinate data on coordinates representing the contour of the front surface 14 of the rigid core 13 in the rectangular coordinate system. The controller 40 controls the movement of the guide roller 30 in directions parallel to the X- and the Y-axis and the turning movement of the turning support head 25.

The movement of the guide roller 30 along the contour of the front surface 14 of the rigid core 13 in directions parallel to the X-and Y-axis is controlled. Upon the completion of one turn of the rigid core 13, the guide roller 30 is shifted by a pitch or distance corresponding to the diameter of the cord 1 and the angle θ is adjusted so that the guide roller 30 is always perpendicular to the contour of the front surface 14.

As shown in Fig. 3, coils of the cord 1 are wound in succession so that adjacent ones of the coils are contiguous with each other to form an annular reinforcement (annular cord structure) 2 on the front surface 14 of the rigid core 13.

The guide roller 30 is turned so that the guide roller 30 is always perpendicular to the contour. Therefore, positioning the cord 1 on the front surface 14 of the rigid core 13 can be surely and stably achieved even if the front surface 14 is inclined and the coils of the cord 1 can be accurately arranged and the annular reinforcement 2 can be formed in a desired shape.

The guide roller 30 turns about the center axis of the cord 1 aligned with the vertical axis C when the angle θ is changed. Therefore, the position of the cord 1 will not be changed and the coils of the cord 1 will not be disarranged when the guide roller 30 is turned.

The cord arranging machine 10 in this embodiment moves the guide roller 30 two-dimensionally in directions parallel to the X- and the Y-axis along the surface of the rigid core 13 and changes the angular position of the guide roller 30 so that the guide roller 30 presses the cord 1 against the working surface of the rigid core 13 always perpendicularly to the working surface thereof. Therefore, the cord 1 can be surely positioned in place even if the working surface of the rigid core 13 is inclined, and coils of the cord 1 can be accurately arranged. Thus annular wire structures of various shapes can be easily formed.

Although this embodiment winds the cord 1 on the rigid core 13, the cord 1 may be wound on a rotatably supported unvulcanized tire instead of the rigid core 13 to form the annular reinforcement 2.

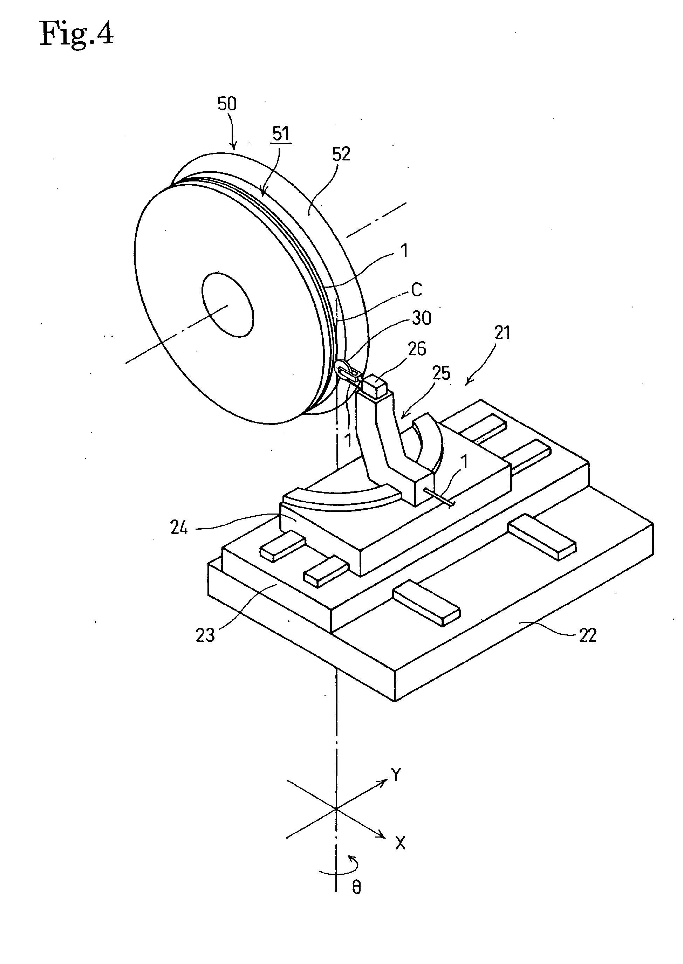

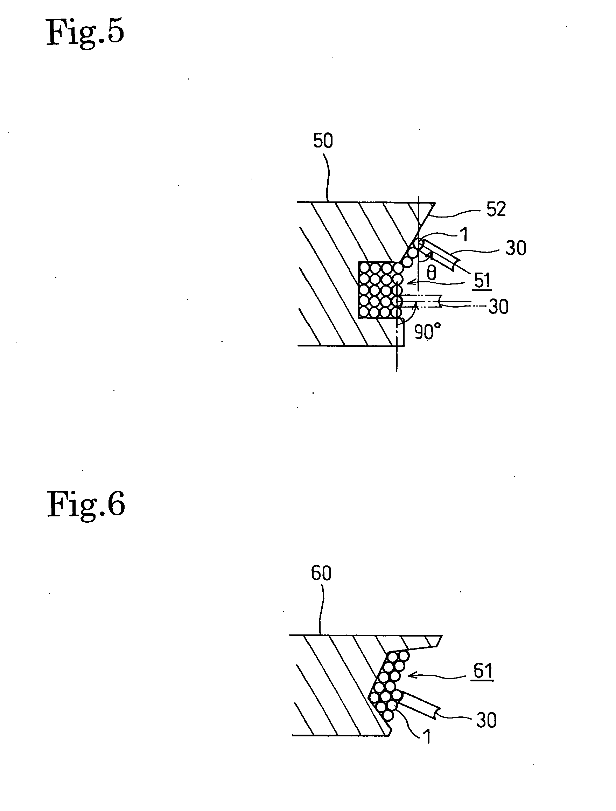

A cord arranging machine in another embodiment of the present invention for forming a bead wire, namely, a tire component, will be described with reference to Figs. 4 and 5.

This cord arranging machine employs a bead wire former 50 having the shape of a flat cylinder instead of the rigid core 13, and a cord feed unit 21 identical with the cord feed unit 21 employed in the foregoing embodiment.

The bead wire former 50 is provided with a circumferential groove 51. One of the side surfaces of the circumferential groove 51 is formed to have a taper surface 52.

Positions of the bead wire former 50 and the wire feed unit 21 relative to each other are determined so that the center axis of the bead wire former 50 is parallel to the Y-axis as shown in Fig. 4. At an initial stage, a guide roller 30 is positioned such that the angle θ between a guide roller 30 and the Y-axis is 90° to wind a cord 1 in coils in the circumferential groove 51.

Referring to Fig. 5, the guide roller 30 is moved in a direction parallel to the Y-axis to wind the cord 1 in successive coils on the bottom surface of the circumferential groove 51 to form a first cord layer. Then, the guide roller is shifted by a pitch in a direction parallel to the X-axis to wind the cord 1 in successive coils to form a second cord layer. Similarly, a third and a fourth cord layer are formed in the circumferential groove 51. Then, the guide roller 30 is turned so as to reduce the angle θ to set the guide roller 30 in an angular position perpendicular to the taper surface 52 of the bead wire former 50. Then, the cord 1 is laid in successive coils on the taper surface 52. Thus a bead wire of a special shape can be formed.

As shown in Fig.6, the cord feed unit 21 can readily cope with a case where a bead wire former 60 provided with a circumferential groove 61 having an inclined bottom surface is used. At an initial stage, the angle θ is adjusted to position the guide roller 30 perpendicularly to the inclined bottom surface of the circumferential groove 61.

## Claims

1. A cord arranging method comprising:
continuously feeding a cord to a rotating core; and
guiding the continuously fed cord by a guide roller by moving the guide roller along a surface of the core such that the cord is wound in continuously arranged cord coils;
wherein the guide roller is moved two-dimensionally along the surface of the core and the angular position of the core is varied such that the guide roller presses the cord always perpendicularly to the surface of the core.

2. The cord arranging method according to claim 1,
wherein the angular position of the guide roller is changed by turning the guide roller about a center axis of a part of the cord pressed against the surface of the core by the guide roller.

3. A cord arranging machine comprising a core, a rotational drive mechanism for holding and rotating the core, a guide roller for guiding a continuously fed cord such that the cord is wound in successively arranged coils on a surface of the core; said cord arranging machine comprising:
a sliding table mechanism provided for movement in directions toward and away from the core and parallel to the surface of the core; and
a turning support head for supporting the guide roller for rotation;
wherein a circular rail of a shape resembling an arc of a circle having its center on a side of the core is laid on the sliding table mechanism, and the turning support head is guided by the circular rail for movement such that the position of the turning support head changes so as to make the guide roller press the cord against the surface of the core always perpendicularly to the surface of the core.

4. The cord arranging machine according to claim 3, wherein the turning support head supporting the guide roller for rotation is provided at an end thereof with a rod for advancing movement, a forked support attached to a free end of the rod and a shaft extended across and supported on the forked support, and the guide roller is rotatably supported by the shaft.

5. The cord arranging machine according to claim 3 or 4 further comprising a controller for controlling the sliding table mechanism and the turning support head to change the angular position of the guide roller such that the guide roller presses the cord against the surface of the core always perpendicularly to the surface of the core.
